# EUROPEAN PATENT APPLICATION

(11) **EP 2 428 494 A2**
(43) Date of publication of application: **14.03.2012**
(21) Application number: 11169257.0
(22) Date of filing: 09.06.2011
(51) Int. Cl.: C03B 33/03, C03B 33/033, C03B 33/09

(54) **Laser dividing apparatus**

(30) Priority: 10.09.2010 JP 2010202874
(71) Applicant: Mitsuboshi Diamond Industrial Co., Ltd., Suita-city, Osaka 564-0044 (JP)
(72) Inventor: Tabata, Atsushi, Suita-city Osaka 564-0044 (JP)
(74) Representative: TBK

(57) **Abstract**

[Object] In a laser dividing apparatus where a substrate is bent using a rod member, the substrate can be quickly and precisely positioned so that the line along which the substrate is to be irradiated with a laser beam and the rod member overlap when viewed in the direction in which the substrate is to be irradiated with a laser beam.

[Means for Achieving Object] CCD cameras 38, 39 for detecting the position of a substrate 50, a rotational mechanism 25 for rotating a platform 11, and a slide table 26 for moving the platform 11 in the direction X are provided, and the position of the platform 11 on which the substrate 50 is secured is adjusted using the rotational mechanism 25 and the slide table 26 on the basis of the information detected by the CCD cameras 38, 39 so that the line 51 along which the substrate 50 is to be irradiated with a laser beam and the rod member 12 overlap when viewed in the direction in which the substrate 50 is to be irradiated with a laser beam.

## Description

### Technical Field

The present invention relates to a laser dividing apparatus for irradiating a brittle material substrate with a laser beam in such a state that the substrate is bent, and dividing the substrate.

### Background Art

In accordance with a widely used conventional method for dividing a brittle material substrate such as a glass substrate, a cutter wheel is rolled over a substrate while being pressed against it so that a scribe line is created through perpendicular cracking, and after that an external force is applied to the substrate along the scribing line in the perpendicular direction so that the substrate is divided.

In the case where a brittle material substrate is scribed using a conventional cutter wheel, it is easy for the substrate to become defective due to the mechanical stress applied to the substrate from the cutter wheel, and in some cases cracking is caused by these defects when the substrate is divided through the application of an external force.

In recent years, a method for dividing a brittle material substrate using a laser has been put into practice. According to this method, a substrate is irradiated with a laser beam so as to be heated to a temperature lower than the melting temperature, and after that the substrate is cooled using a coolant so that thermal stress is generated in the substrate. This thermal stress allows for cracking in the direction approximately perpendicular to the surface of the substrate (hereinafter referred to as perpendicular cracking). In this method for dividing a brittle material substrate using a laser beam, thermal stress is used and no tool makes direct contact with the substrate, and therefore the divided surface is smooth with little chipping and the strength of the substrate is maintained.

In order to make the perpendicular cracking deep in the above described so-called laser dividing method, it is necessary to increase the output of the laser beam for irradiation or to make the scanning speed slow. However, when the output of the laser beam for irradiation is increased, the surface of the substrate may be damaged due to heat. In addition, when the scanning speed of the laser beam is reduced, the process efficiency lowers.

Thus, a technology for bending a substrate, which is irradiated with a laser beam in this state so that the perpendicular cracking becomes deeper, has been proposed. In Patent Document 1, for example, a substrate is supported by a number of rod members with varying heights, and thus the substrate is bent by its own weight.

### Prior Art Document

### Patent Document

Patent Document 1: Japanese Unexamined Patent Publication 2007-191363

### Summary of the Invention

### Problem to Be Solved by the Invention

In the technology proposed in Patent Document 1, however, the height of the number of rod members must be adjusted respectively and the process is complicated. Meanwhile, in the case where the substrate is bent using one rod member, though it is easy to adjust the height of the rod member, precise positioning is required so that the line along which the substrate is to be irradiated with a laser beam and the rod member overlap when viewed in the direction in which the substrate is irradiated with a laser beam.

The present invention is provided in light of these problems with the prior art, and an object of the invention is to provide a laser dividing apparatus where a substrate is bent using a rod member and the substrate can be quickly and precisely positioned so that the line along which the substrate is to be irradiated with a laser beam and the rod member overlap as viewed in the direction in which the substrate is irradiated with a laser beam.

### Means for Solving Problem

The present invention provides a laser dividing apparatus having: a platform for securing a brittle material substrate; a laser irradiation means; a cooling means; and a rod member for bending a substrate secured on the above described platform so that the side to be irradiated with a laser beam protrudes, wherein the above described substrate is bent using the above described rod member, the above described laser irradiation means and the above described cooling means are moved over the above described substrate, the above described substrate is irradiated with a laser beam so as to be heated to a temperature lower than the melting temperature, and then a coolant is blown against the above described substrate so that the above described substrate is cooled, and thus perpendicular cracking is created due to thermal stress caused in the above described substrate and the above described substrate is divided, characterized in that the laser dividing apparatus further has: a position detecting means for detecting the position of the above described substrate; and a position adjusting means for adjusting the position of the above described platform, and the position of the above described platform on which the above described substrate is secured is adjusted using the above described position adjusting means on the basis of the detection information from the above described position detecting means so that the line along which the above described substrate is to be irradiated with a laser beam and the above described rod member overlap as viewed in the direction in which the above described substrate is to be irradiated with a laser beam.

Here, it is preferable for the above described position adjusting means to have: a rotational mechanism for rotating the above described platform around an axis of the above described platform perpendicular to the surface on which a substrate is secured; and a moving mechanism for moving the above described platform so that the surface on which a substrate is secured is kept in the same plane.

In addition, it is preferable for the above described position detecting means to optically detect a mark on a substrate.

Furthermore, it is preferable for the above described platform to be provided with a suction means for securing a substrate.

Moreover, it is preferable for the above described rod member to freely move over the above described platform, including a protruding position and a recess position, and bend a substrate when the above described rod member moves to a position that protrudes from the above described platform.

In order to bend a substrate to a desired form even in the case where the above described substrate is thick, it is preferable for a pair of pressing members for pressing two points of a substrate against the above described platform with the above described rod member in between to be further provided so that the above described substrate is secured on the above described platform and the above described platform is pressed by the above described pair of pressing members, and after that the above described substrate is bent using the above described rod member.

### [Effects of the Invention]

In the laser dividing apparatus according to the present invention, a brittle material substrate can be quickly and precisely positioned so that the line along which the substrate is to be irradiated with a laser beam and the rod member overlap when viewed in the direction in which the substrate is to be irradiated with a laser beam, and therefore the substrate can be bent using the rod member so that the curvature becomes maximum along the line along which the substrate is to be irradiated with a laser beam. In addition, deep perpendicular cracking can be created when the substrate is irradiated with a laser beam along the line.

### Brief Description of the Drawings

Fig 1 is a schematic diagram showing the laser dividing apparatus according to one embodiment of the present invention;
Figs 2(a) and 2(b) are plan diagrams showing an example of adjusting the position of a substrate;
Figs 3(a) to 3(d) are diagrams showing a process in the case where a substrate is divided using the laser dividing apparatus in Fig 1;
Figs 4(e) to 4(g) are diagrams showing the continuation of the process in the case where a substrate is divided using the laser dividing apparatus in Fig 1;
Fig 5 is a perspective diagram illustrating the state where a laser beam and a cooling nozzle move; and
Figs 6(a) to 6(c) are diagrams illustrating the state where the rod member moves from the first protruding position to the second protruding position.

### Best Mode for Carrying Out the Invention

In the following, the laser dividing apparatus according to the present invention is described in further detail, but the present invention is not limited to these embodiments.

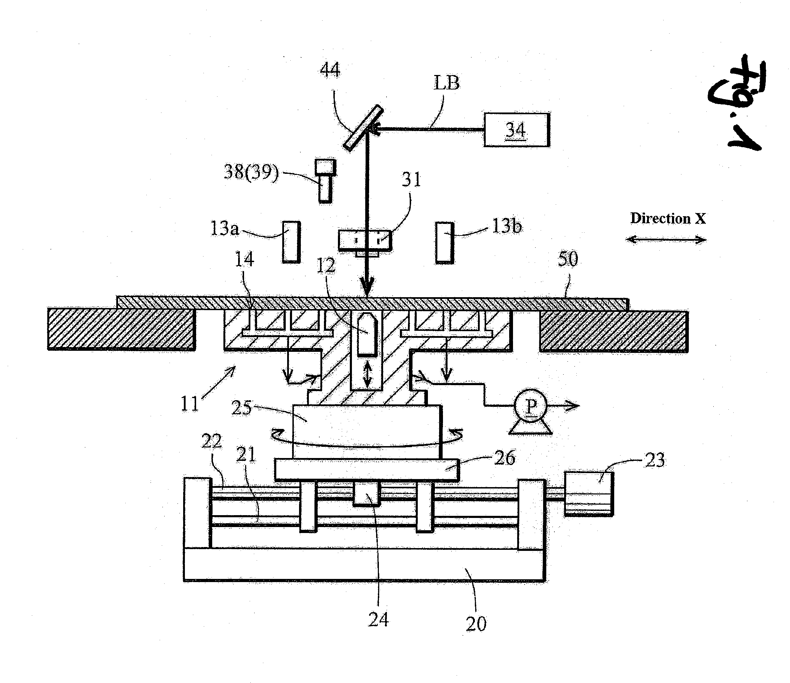

Fig 1 is a schematic diagram showing an example of the laser dividing apparatus according to the present invention. The laser dividing apparatus in this figure is provided with a platform 11 on which a brittle material substrate (hereinafter simply referred to as substrate) 50 is placed and secured on top of a rotary mechanism 25 and a slide table 26 (moving mechanism). That is to say, the slide table 26, which freely moves in the left/right direction (direction X) in the figure, is provided on top of a base 20, and the rotational mechanism 25 is provided on top of the slide table 26. The rotational mechanism 25 and the slide table 26 allow the substrate 50 placed on and fixed to the platform 11 to move in the direction X at a certain angle horizontally within a plane.

The slide table 26 is supported by a pair of guide members 21, which are arranged parallel at a predetermined distance from each other on top of the base 20, so as to be movable. In addition, a ball screw 22 is provided between the pair of guide members 21 parallel to the guide members 21 so as to be rotatable in either direction by means of a motor 23. A ball nut 24 is provided at the bottom of the slide table 26 and engaged with the ball screw 22. When the ball screw 22 rotates in either direction, the ball nut 24 moves in the direction X, and as a result the slide table 26 moves in the direction X along the pair of guide members 21 together with the ball nut 24.

The rotational mechanism 25 is provided on top of the slide table 26. In addition, the platform 11 is provided on top of this rotational mechanism 25. The rotational mechanism 25 rotates around the vertical center axis of the platform 11.

The substrate 50, which is to be divided, is secured on top of the platform 11 by means of vacuum suction. A number of suction holes (suction means for securing a substrate) 14 are created on the surface of the platform 11, and these suction holes 14 are connected to a vacuum pump (suction means for securing a substrate) P. When the vacuum pump P is driven to draw out air, the substrate 50 is sucked and secured to the platform 11. A trench is created in the center portion of the platform 11 so as to run perpendicularly in Fig 1 (forward/backward direction). A rod member 12 is provided in this trench so as to run in the forward/backward direction and be freely movable between the position where the rod member 12 protrudes from the platform 11 and the position at which the rod member 12 is beneath the surface of the platform 11 by means of a driving means. When the rod member 12 is at such a position as to protrude from the platform 11, the substrate 50 is bent so that the side that is to be irradiated with a laser beam LB protrudes. This is described in detail below.

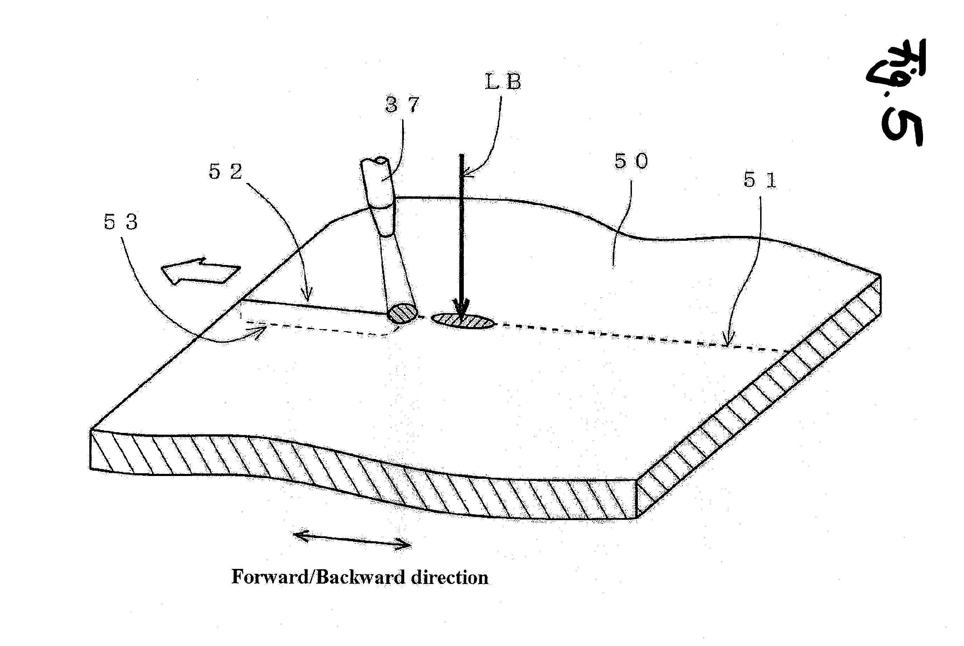

A support 31 is provided above the platform 11 so as to face the platform 11 at a distance. The support 31 is provided with a cutter wheel, not shown, for creating trigger cracking on the surface of the substrate 50, an opening through which the substrate 50 is irradiated with a laser beam LB, and a cooling nozzle 37 for cooling the rod member 12 and the surface of the substrate 50 (cooling means shown in Fig 5) aligned in the forward/backward direction.

The cutter wheel, not shown, can be raised and lowered so as to be held either at a position at which the cutter wheel makes contact with the substrate 50 with pressure or at a position at which the cutter wheel does not make contact with the substrate 50. The cutter wheel is lowered to the position at which the cutter wheel makes contact with the substrate 50 with pressure only when trigger cracking is created at the point at which a scribe line 52 (shown in Fig 5) starts being created. It is preferable for the point at which the trigger cracking is created to be located inside the surface of the substrate 50 so that the trigger cracking can be prevented from inducing cracking in an unexpected direction.

The laser beam LB emitted from the laser output apparatus 34 is reflected downward from a reflection mirror 44 so as to pass through an optical system, not shown, and the opening created in the support 31 so that the substrate 50 secured to the top of the platform 11 is irradiated with the laser beam LB.

A pair of pressing members 13a and 13b, which are in rectangular parallelepiped form, running in the forward/backward direction are provided on the two sides of the support 31 in the direction X. These pressing members 13a and 13b are freely movable in the direction X and in the upward/downward direction by means of a driving means, not shown. As described below, the pressing members 13a and 13b press the substrate 50 secured to the platform 11 on the two sides, left and right, with the rod member 12 at the center so as to help bend the substrate 50 when the rod member 12 protrudes. Here, in the case where the substrate 50 can be secured only through suction on the platform 11 when the rod member 12 protrudes, it is not necessary to use the pressing members 13a and 13b.

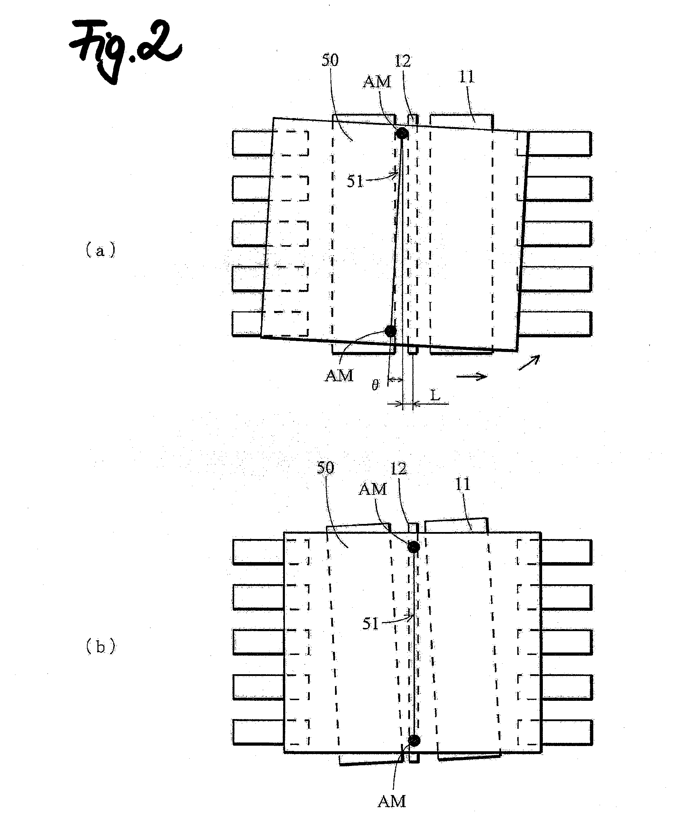

A pair of CCD cameras (position detecting means) 38 and 39 for recognizing the alignment mark AM (detection mark shown in Fig 2) engraved in the substrate 50 in advance are provided above the platform 11. The alignment mark AM is recognized by these CCD cameras 38 and 39, and the position of the substrate 50 is adjusted by driving the rotational mechanism 25 and the slide table 26 so that the line 51 along which the substrate 50 is to be irradiated with a laser beam (shown in Fig 2) and the rod member 12 overlap as viewed from the top.

Concretely, the substrate is placed on the platform 11 and the vacuum pump P (shown in Fig 1) is driven so that the substrate 50 is sucked and secured to the platform 11 by means of suction holes 14 (shown in Fig 1). Then, the alignment mark AM is recognized by the CCD cameras 38 and 39 so as to detect the amount of misalignment of the substrate 50 placed on and secured to the platform 11. As shown in Fig 2(a), for example, in the case where the substrate 50 is misaligned at a distance "-L" in the direction X at an angle "-θ," the rotational mechanism 25 rotates the platform 11 by an angle "+θ," and at the same time the slide table 26 moves in the direction X by a distance "+L" so that the line 51 along which the substrate 50 is to be irradiated with a laser beam and the rod member 12 overlap as viewed from the top (Fig 2(b)). The rotational mechanism 25 and the slide table 26 may be driven simultaneously or one may be driven before the other is driven.

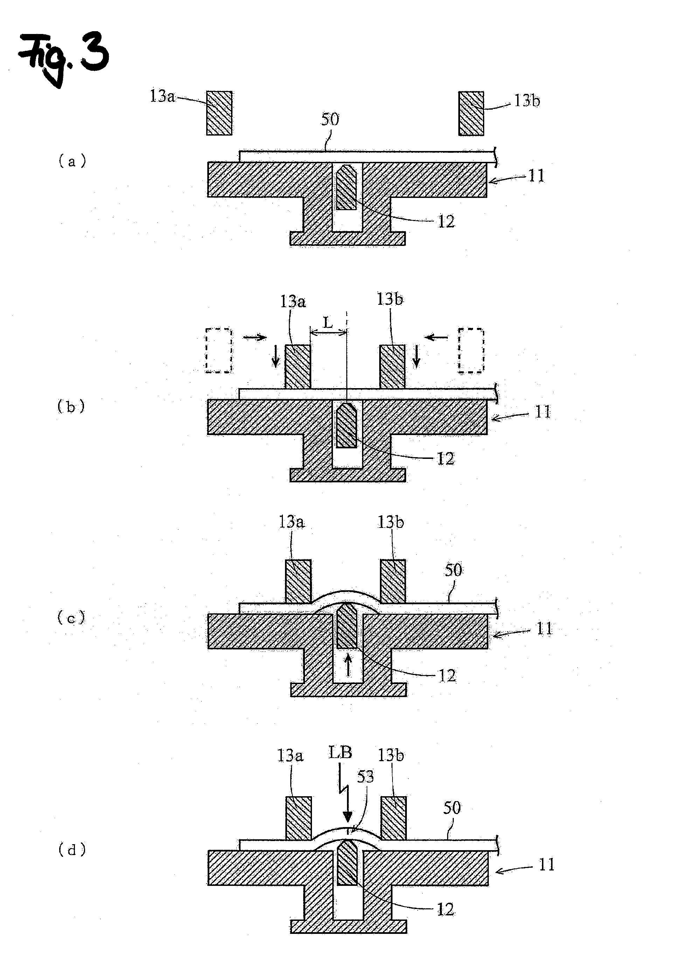

After the substrate 50 has been secured to the platform 11 and the position of the substrate 50 has been adjusted, a dividing process is carried out on the substrate 50. Figs 3(a) to 4(g) are diagrams showing the steps of dividing the substrate 50. Here, the suction means for sucking and securing the substrate 50 to the platform 11, the laser beam irradiation means and the cooling means are omitted in order to simplify the figures.

First, the pressing members 13a and 13b are moved into the center portion and are then lowered so that the substrate 50 is pressed against and secured to the platform 11 (Figs 3(a) and 3(b)). It is preferable for the degree to which the pressing members 13a and 13b press and secure the substrate 50 to be detected by a sensor so that the pressure is appropriately controlled. In addition, the position at which the substrate 50 is secured by means of the pressing members 13a and 13b may be appropriately determined on the basis of the material and the thickness of the substrate 50, and it is preferable for the radius of curvature of the substrate 50 to be 4000 mm or less when the rod member 12 protrudes and the substrate 50 is curved. In this regards, it is preferable for the distance L between the rod member 12 and the pressing members 13a and 13b to be 100 mm or more and 300 mm or less in the case where the rod member 12 protrudes 5 mm or less. In addition, it is preferable for the pressing members 13a and 13b to press the entirety of the substrate 50 in the forward/backward direction, but the substrate 50 may be pressed at points at a certain distance away from each other in the forward/backward direction.

Next, the rod member 12 is made to protrude from the platform 11 so as to be at a first protruding position. As a result, the substrate 50 is bent (Fig 3(c)). It is preferable for the rod member 12 to protrude so that the radius of curvature of the substrate 50 is 4000 mm or less when the substrate 50 is bent, and the rod member 12 usually protrudes in a range from 0.1 mm to 5 mm.

Next, as described above, trigger cracking is created in the substrate 50 by means of the wheel cutter. Then, a laser beam LB is emitted from the laser outputting apparatus 34 (Fig 3(d)). As shown in Fig 5, the laser beam LB is reflected by the reflection mirror 44 so as to enter into the surface of the substrate 50 almost perpendicular to the surface. At the same time, the cooling nozzle 37 blows out water, which is a coolant, in the vicinity of the rear end of the area irradiated with a laser beam. When the substrate 50 is irradiated with a laser beam LB, the substrate 50 is heated in the direction of the depth to a temperature lower than the melting temperature. Though the substrate tends to thermally expand, it cannot do so because the heating is local and compression stress is applied at the center of the point that is irradiated with the laser beam. When the surface of the substrate 50 is cooled by water immediately after heating, the substrate 50 contracts at this time, generating tensile stress. This tensile stress works to create vertical cracking 53 in the substrate 50 along the line 51 with the trigger cracking at the starting point. In addition, in the apparatus according to the present invention, another tensile stress is generated by bending the substrate 50 on the side of the substrate 50 that is irradiated with the laser beam, and thus the vertical cracking 53 is deeper than usual, and is some cases, the vertical cracking 53 reaches to the opposite side of the substrate 50.

Then, the laser beam LB and the cooling nozzle 37 move in the forward/backward direction along the line 51 so that the vertical cracking 53 progresses in the forward/backward direction and a scribe line 52 is created in the substrate 50.

The laser beam LB used here is not particularly limited and may be appropriately selected depending on the material and the thickness of the substrate as well as the depth of the vertical cracking that is desired. In the case where the brittle material substrate is a glass substrate, a laser beam with a wavelength of 9 µm to 11 µm that is greatly absorbed by the surface of a glass substrate is appropriate for use. An example of such a laser beam is that from a CO₂ laser. It is preferable for the area that is to be irradiated with the laser beam to be in elliptical form that is long in the direction in which the laser beam moves, and it is preferable for the length of the area in the direction in which the laser beam moves to be in a range from 10 mm to 60 mm and for the width of the area to be in a range from 1 mm to 5 mm.

Examples of the coolant to be blown out from the cooling nozzle 37 are water and alcohol. In addition, an additive such as a surfactant may be added as long as it does not negatively affect the use of the brittle material substrate after being divided. It is usually preferable for the coolant to be blown out by an amount of several ml/min. It is desirable for the substrate to be cooled by the coolant in accordance with a so-called water jet method where water is jetted out together with a gas (usually air) in order to quickly cool the substrate heated by the laser beam. It is preferable for the area to be cooled by the coolant to be in circle form or elliptical form having a long diameter of 1 mm to 5 mm. In addition, the cooled area is behind the area heated by the laser beam, and it is preferable for the distance between the centers of the cooled area and the heated area to be several mm to several tens of mm.

The speed of the laser beam LB and the cooling nozzle 37 are not particularly limited and may be appropriately selected depending on the depths of the vertical cracking to be desired. In general, the slower the moving speed is, the deeper the created vertical cracking is. The moving speed is usually several hundreds of mm/sec.

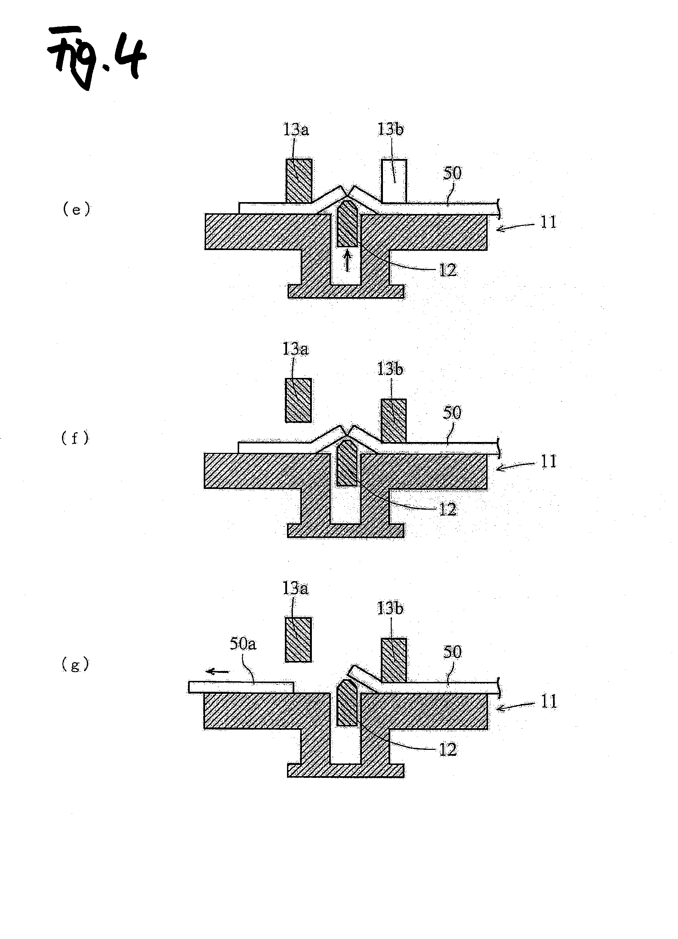

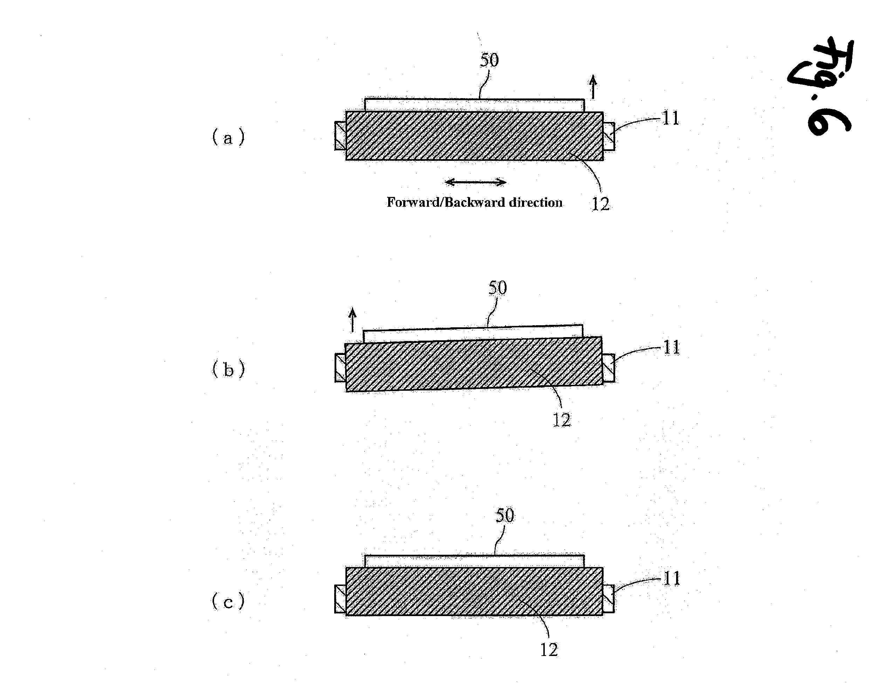

Next, the rod member 12 is made to further protrude at a second protruding position (Fig 4(e)). As a result, the vertical cracking 53 created in the substrate 50 reaches to the opposite side of the substrate 50 so that the substrate 50 is divided. Here, in the case where the vertical cracking 53 reaches to the opposite side of the substrate 50 in the preprocess of creating vertical cracking 53 through irradiation with a laser beam LB, the step shown in this figure is unnecessary. The amount of protrusion of the rod member 12 is not particularly limited as long as the vertical cracking 53 reaches to the opposite side of the substrate 50, and a further protrusion of approximately 0.1 mm to 1 mm from the first protruding position is usually sufficient. When the rod member 12 moves from the first protruding position to the second protruding position, the two ends of the rod member 12 in the forward/backward direction may move simultaneously or as shown in Figs 6(a) to 6(c), one end of the rod member 12 may move first and the other end may move afterwards.

When the substrate 50 is divided, the pressing member 13a is raised so as to release the pressure on the substrate 50a with the rod member 12 staying at the second protruding position (Fig 4(f)). Then, the suction for securing the substrate to the platform 11 is relieved and the substrate 50a is moved to the next step (Fig 4(g)). Here, the pressure on the substrate 50a is relieved with the rod member 12 staying at the second protruding position, and the substrate 50a is moved to the next step because there is a risk of the ends of the substrates 50a and 50b making contact with each other, thereby causing damage, when the rod member 12 is lowered to the position beneath the surface of the platform in the case where the substrate 50 is moved after the rod member 12 has been moved from the second protruding position to the position beneath the surface of the platform. Next, the substrate 50b moves by a certain distance so as to cross the rod member 12, and the above described sequence of the dividing process is repeated. Here, the steps in Figs 4(f) and 4(g) may be carried out simultaneously.

The brittle material substrate 50 to be divided by the laser dividing apparatus according to the present invention is not particularly limited, and publicly known brittle material substrates such as of glass, ceramics, silicon and sapphire can be cited as examples. From among these, tempered glass substrates such as chemically strengthened glass and air-cooled strengthened glass, which have high surface compression stress and make cross scribing difficult, are appropriate as a brittle material substrate on which the laser dividing apparatus according to the present invention can be used. In addition, the maximum thickness of the brittle material substrate 50 that can be divided by the laser dividing apparatus according to the present invention differs depending on the material of the brittle material substrate 50, and the maximum thickness is approximately 2 mm in the case where the brittle material substrate 50 is a glass substrate.

### Industrial Applicability

In the laser dividing apparatus according to the present invention, a substrate can be quickly and precisely positioned so that the line along which the substrate is to be irradiated with a laser beam and the rod member overlap when viewed in the direction in which the substrate is to be irradiated with a laser beam. As a result, the substrate can be bent so that the maximum curvature is gained along the line along which the substrate is to be irradiated with a laser beam, and thus deep perpendicular cracking can be created in the substrate when the substrate is irradiated with a laser beam along the line, and therefore the laser dividing apparatus is useful. Explanation of Symbols

- 11: platform
- 12: rod member
- 13a, 13b: pressing members
- 25: rotational mechanism
- 26: slide table (moving mechanism)
- 37: cooling nozzle
- 38, 39: CCD cameras (position detecting means)
- 50: brittle material substrate
- 51: line along which the substrate is to be irradiated with a laser beam
- 53: perpendicular cracking (vertical cracking)
- P: vacuum pump
- LB: laser beam
- AM: alignment mark (detection mark)
In a laser dividing apparatus where a substrate is bent using a rod member, the substrate can be quickly and precisely positioned so that the line along which the substrate is to be irradiated with a laser beam and the rod member overlap when viewed in the direction in which the substrate is to be irradiated with a laser beam. [Means for Achieving Object] CCD cameras 38, 39 for detecting the position of a substrate 50, a rotational mechanism 25 for rotating a platform 11, and a slide table 26 for moving the platform 11 in the direction X are provided, and the position of the platform 11 on which the substrate 50 is secured is adjusted using the rotational mechanism 25 and the slide table 26 on the basis of the information detected by the CCD cameras 38, 39 so that the line 51 along which the substrate 50 is to be irradiated with a laser beam and the rod member 12 overlap when viewed in the direction in which the substrate 50 is to be irradiated with a laser beam.

## Claims

1. A laser dividing apparatus, comprising: a platform for securing a brittle material substrate; a laser irradiation means; a cooling means; and a rod member for bending a substrate secured on said platform so that the side to be irradiated with a laser beam protrudes, wherein said substrate is bent using said rod member, said laser irradiation means and said cooling means are moved over said substrate, said substrate is irradiated with a laser beam so as to be heated to a temperature lower than the melting temperature, and then a coolant is blown against said substrate so that said substrate is cooled, and thus perpendicular cracking is created due to thermal stress caused in said substrate and said substrate is divided, **characterized in that**
the laser dividing apparatus further comprises: a position detecting means for detecting the position of said substrate; and a position adjusting means for adjusting the position of said platform, and
the position of said platform on which said substrate is secured is adjusted using said position adjusting means on the basis of the detection information from said position detecting means so that the line along which said substrate is to be irradiated with a laser beam and said rod member overlap as viewed in the direction in which said substrate is to be irradiated with a laser beam.

2. The laser dividing apparatus according to Claim 1, wherein said position adjusting means comprises: a rotational mechanism for rotating said platform around an axis of said platform perpendicular to the surface on which a substrate is secured; and a moving mechanism for moving said platform so that the surface on which a substrate is secured is kept in the same plane.

3. The laser dividing apparatus according to Claim 1, wherein said position detecting means optically detects a mark on a substrate.

4. The laser dividing apparatus according to Claim 1, wherein said platform is provided with a suction means for securing a substrate.

5. The laser dividing apparatus according to Claim 1, wherein said rod member freely moves over said platform, including a protruding position and a recess position, and bends a substrate when said rod member moves to a position that protrudes from said platform.

6. The laser dividing apparatus according to Claim 1, further comprising a pair of pressing members for pressing two points of a substrate against said platform with said rod member in between, and
said substrate is secured on said platform and said platform is pressed by said pair of pressing members, and after that said substrate is bent using said rod member.
